# EUROPEAN PATENT APPLICATION

(11) **EP 2 940 226 A1**
(43) Date of publication of application: **04.11.2015**
(21) Application number: 14166589.3
(22) Date of filing: 30.04.2014
(51) Int. Cl.: E04B 1/76

(54) **Insulation products based on mineral fibers and method to manufacure such products**

(71) Applicant: URSA Insulation, S.A., 28004 Madrid (ES)
(72) Inventor: Casado Dominguez, Arturo Luis, 28680 Paracuellos de Jarama Madrid (ES)
(74) Representative: Hoffmann Eitle

(57) **Abstract**

The present invention relates to an insulation material comprising a mineral wool with average density of 20 to 80 kg/m3 and organic content of 2 to 12 weight %, with the mean fiber diameter being in the range of 1 to 5 µm, the fraction of fibers of diameter of less than 2 um being at least 30%, the density variation with respect to average density throughout any of the 3 dimensions being less than 5%, and said insulation material having a heat conductivity of 0.021 to 0.029 W/m.K.

The invention further relates to a method for producing an inventive insulation material comprising the steps of rotating a spinner having an orificed peripheral wall, with the orificed peripheral wall of the spinner having a top row of orifices, introducing molten mineral material to the spinner to create a fan of primary mineral fibers, creating an annular combustion flow of heated gas and directing the annular combustion flow of heated gas substantially through the primary fibers, creating an annular flow of attenuating air with an annular blower, the annular flow of attenuating air being sufficient to attenuate the primary fibers into secondary fibers, directing the annular combustion flow of heated gas and the annular flow of attenuating air so that they are radially spaced apart at the level of the top row of orifices, directing the annular combustion flow of heated gas and the annular flow of attenuating air so that they are brought together at a position below the top row of orifices, entraining the fibers formed by this attenuating gas stream to a receiving device, generally consisting of a gas-permeable belt which is combined with suction means, spraying a binder onto the fibers to bind the fibers into a wool product while they are being drawn to the receiving device, distributing the stream of fibers into the receiving device by means of additional air streams and or mechanical means, accumulating the fibers on the receiving device under the effect of the suction to provide a fiber mat, the thickness of which may vary depending on the final product to be obtained, densifying the secondary fleece.

## Description

### Prior Art

The present invention relates to insulation products based on mineral fiber wool, as well as to a method for producing said insulation products. Insulation materials are typically used in thermal and acoustic insulation in buildings and vehicles. Such insulation materials are usually in the form of a sheet-like fleece or a board. Typical insulation fleeces or boards are made of a fibrous material such as polymeric materials or mineral wool. Due to the efficient insulation properties as well as the low production costs and environmental compatibility, mineral wools such as glass fibers, ceramic fibers and stone wool are preferred materials for the manufacture of insulating materials.

Products based on mineral wool, particularly glass wool, are obtained by a rotary process. In a rotary process, glass composition is melted and forced through orifices in the outer peripheral wall of a centrifuge, commonly known as a centrifugal spinner, and exposed to a high pressure flow of hot air to produce the fibers.

Thermal and acoustic insulation properties are inter alia based on the microstructure of the material which in principle consists of a fiber framework and respective voids which are formed in between said fiber framework. For an efficient insulation, said microstructure is required to be highly uniform, i.e. the framework and the voids thereof should be evenly distributed throughout the fiber material and have a uniform range of size. However, insulation materials on a mineral fiber basis have non-uniformity microstructure which leads to a reduction in the material's insulation efficiency. Additionally, for thermal insulation, the microstructure consisting of fiber framework and respective voids shall hamper the three most relevant heat transfer mechanisms; namely the conduction through the gas phase, the conduction though the solid phase and the radiation.

The technical problem underlying the present invention is to provide an insulation material on the basis of mineral fibers, which should have a highly uniform microstructure, said microstructure minimizing abovementioned heat transfer mechanisms, for a better insulation behavior.

The above technical problem is solved by providing the embodiments of the present invention. Herein the expressions "mineral wool" and "mineral fiber wool" are used synonymously and include any fiber wool which is made from natural or synthetic minerals or metal oxides, such as fiber glass, ceramic fibers and rock or stone wool. Similarly, the term "insulation material" as used herein is not specifically restricted and includes any mineral fiber based material as such or in form of a composite material which comprises a mineral fiber based material.

### Invention Description

This technical problem outlined above is solved by an insulation material according to claim 1, and a method according to claim 6. Preferred embodiments follow from the other claims.

To this end, the invention proposes an insulation material comprising a mineral wool with average density of 20 to 80 kg/m³ and organic content of 2 to 12 weight %, characterized in that:
(i) The mean fiber diameter is in the range of 1 to 5 µm,
(ii) the fraction of fibers of diameter of less than 2 um is at least 30%,
(iii) the density variation with respect to average density throughout any of the 3 dimensions is less than 5%,
(iv) said insulation material having a heat conductivity of 0.021 to 0.029 W/m.K.

### (Embodiment 1 - lambda 025-029)

According to a first embodiment of present invention, the insulation material comprises a mineral wool having a heat conductivity of 0.025 to 0.029 W/m.K, preferably 0.025 to 0.027 W/m.K. and the mean fiber diameter of said mineral wool is in the range of 2 to 4 µm. Preferably the mean fiber diameter of said mineral wool is in the range of 2.5 to 3.5 µm. Similarly, it is preferred that the fraction of fibers of diameter of less than 2 um is at least 30%, preferably at least 40%. The mean fiber diameter and fraction of fibers of diameter of less than 2 um is measured by means of digital image analysis described below. The average bulk density is in the range of 20 to 80 kg/m³, preferably in the range of 30 to 60 kg/m³. It is also preferred that the density variation with respect to average density throughout any of the 3 dimensions is less than 5%, preferably less than 3%. The measurement of the density and density variation is described below. According to the present embodiment, it is preferred that the organic content is from about 2 to 6 weight %, preferably in the range of 3 to 5 weight %. Further examples include organic content in the range of 6 to 11 weight %, more preferably in the range of 8 to 10 weight %. The organic content in the insulation material comprises the binder to join fibers and ancillary additives described in the art to grant the insulation material with desired properties, such as, but not limited to, mechanical strength, water repellency, control dust emissions and antistatic properties. The type of binder is not specifically restricted as long as it can be used in the manufacture of mineral fiber wool. Non-limiting examples of said binders described in the art include binders based on phenol-formaldehyde, acrylic and/or polysaccharide-based resins. Still according to this embodiment, the above-defined insulation material, at least 60 weight % of the organic content is located at positions where at least two fibers are in contact or at least in close proximity.

### (Embodiment 2 - lambda 021-024)

According to a first embodiment of present invention, the insulation material comprises a mineral wool having a heat conductivity of 0.021 to 0.024 W/m.K, and the mean fiber diameter of said mineral wool is in the range of 1 to 4 µm and the fraction of fibers of diameter of less than 2 µm is at least 40%, preferably at least 50%. It is preferred to provide an insulation material comprises a mineral wool having a heat conductivity of 0.023 to 0.024 W/m.K. Preferably, the mean fiber diameter of said mineral wool is in the range of 1.5 to 3 µm. Further preferred is an insulation material comprising mineral wool with a fraction of fibers of diameter of less than 2 µm of at least 50%. The average bulk density is in the range of 40 to 80 kg/m³, preferably in the range of 50 to 60 kg/m³. It is also preferred that the density distribution with respect to average density throughout any of the 3 dimensions is less than 3%, preferably less than 1%. According to the present embodiment, it is preferred that the organic content is from about 2 to 6 weight %, preferably in the range of 3 to 5 weight %. Further examples include organic content in the range of 6 to 11 weight %, more preferably in the range of 8 to 10 weight %. The organic content in the insulation material comprises the binder to join fibers and ancillary additives described in the art to grant the insulation material with desired properties, such as, but not limited to, mechanical strength, water repellency, control dust emissions and antistatic properties. The type of binder suitable for this embodiment is similar as per the previous embodiment. Still according to this embodiment, the above-defined insulation material, at least 60 weight % of the organic content is located at positions where at least two fibers are in contact or at least in close proximity.

### Description of Measuring Methods

The mean fiber diameter and fraction of fibers of diameter of less than 2 um is measured by means of digital image analysis comprising the steps of: (1) selecting a representative sample of fibers of approximately 1 gram, (2) placing said sample in an optical microscopy equipped with a micron scale, polarized light and digital camera, (3) taking a set of representative pictures, (4) proceeding with an statistical analysis of the images by means of a specific software to get the histogram of fibers' diameter, and (5) calculating the desired magnitudes as from the histogram.

Density variation is measured by a method comprising the steps of: (1) selecting a representative product sample of approximately 30 cm x 30 cm, (2) placing said sample in an X-ray device, which X-ray absorption vs. fiber density response has been calibrated using a standard sample of known density, (3) taking a set of representative X-ray pictures of resolution 3mm x 3mm, (4) proceeding with an statistical analysis of the images by means of a specific software to get the histogram distribution of individual 3mm x 3mm squares' density, and (5) calculating the average density and density standard deviation from said density distribution.

### Process of manufacturing

Another aspect of the present invention relates to a method for producing the insulation material of the invention, comprising the steps of:
(i) rotating a spinner having an orificed peripheral wall,
(ii) the orificed peripheral wall of the spinner having a top row of orifices, introducing molten mineral material to the spinner to create a fan of primary mineral fibers,
(iii) creating an annular combustion flow of heated gas and directing the annular combustion flow of heated gas substantially through the primary fibers,
(iv) creating an annular flow of attenuating air with an annular blower, the annular flow of attenuating air being sufficient to attenuate the primary fibers into secondary fibers
(v) directing the annular combustion flow of heated gas and the annular flow of attenuating air so that they are radially spaced apart at the level of the top row of orifices,
(vi) directing the annular combustion flow of heated gas and the annular flow of attenuating air so that they are brought together at a position below the top row of orifices,
(vii) entraining the fibers formed by this attenuating gas stream to a receiving device, generally consisting of a gas-permeable belt which is combined with suction means,
(viii)spraying a binder onto the fibers to bind the fibers into a wool product while they are being drawn to the receiving device,
(ix) distributing the stream of fibers into the receiving device by means of additional air streams and or mechanical means
(x) accumulating the fibers on the receiving device under the effect of the suction to provide a fiber mat, the thickness of which may vary depending on the final product to be obtained,
(xi) densifying the secondary fleece, and
(xii) curing the fleece at a temperature in the range of 150 to 250°C.

According to a preferred embodiment of the present invention, the spinner has 30,000 to 40,000 orifices, preferentially at least 35,000 orifices. Those orifices are positioned through the peripheral wall. Alternatively, the spinner can have more than 40,000 orifices or less than 30,000 orifices. The orifices are configured to form primary fibers as the molten mineral material is centrifuged out of the peripheral wall of the spinner. The spinner is supplied with a stream of a molten mineral material. One example of a molten mineral material is molten glass. The molten glass in stream drops into a chamber of spinner. In operation, the centrifugal force created by the rotating spinner forces the molten glass in the chamber against the peripheral wall of the spinner. The molten glass forms a head of molten glass adjacent to the peripheral wall of the spinner. As the spinner continues to rotate, the molten glass is forced through the plurality of orifices thereby forming a fan of primary fibers. The term "fan" as used herein, is defined to mean a quantity of primary fibers emanating from the peripheral wall.

An annular blower is configured to provide an attenuating air flow through a plurality of blower apertures. The attenuating air flow flowing through apertures engages the primary fibers, thereby attenuating the primary fibers to form secondary fibers.

The secondary fibers are suitable for use in a product, such as wool insulating materials. The secondary fibers are then collected on a conveyor or other suitable apparatus for formation into a product, such as a mineral wool pack. Alternatively, the secondary fibers can be further processed in downstream operations.

The binder supply device consists of a ring through which the web of secondary fibers flows. The ring includes a multiplicity of nozzles that spray the web of secondary fibers with binder. Usually, the binder that helps to provide mutual cohesion of the fibers includes anti-dust agents, of the oily type, and antistatic agents. However, in order to obtain an even binder distribution within the fiber framework, wherein the binder is mainly positioned on the intersections of individual fibers thereof, said binder should be applied in a highly regular and uniform manner.

The binder treated fibers are evenly distributed on the receiving device by means of devices providing compressed air to the fibers so that the falling position can be drawn at will, forming an evenly density distributed fleece. The fleece is densified and heated in an oven for curing. For example, the curing temperature may be in the range of 150 to 250°C.

### Product use

The insulation material of the present invention is highly effective in thermal and acoustic insulation. These advantageous properties are achieved through the highly uniform microstructure of the mineral wool comprised in said insulation material, which allows a better insulation when compared to general mineral fiber based insulation materials. Furthermore, because of its very fine fibers, insulation material of the present invention offers the advantage of a softer feel, making it much less disagreeable to handle. Finally, the product of the invention, through its density preferably greater than 20 kg/m3 and less than 80 kg/m3, takes the form of relatively rigid sheets which furthermore, because of a standard thickness, can thus be easily handled and can be easily cut and positioned as required against the walls to be insulated.

## Claims

1. An insulation material comprising a mineral wool with average density of 20 to 80 kg/m³ and organic content of 2 to 12 weight %, **characterized in that**:
(i) The mean fiber diameter is in the range of 1 to 5 µm,
(ii) the fraction of fibers of diameter of less than 2 um is at least 30%,
(iii) the density variation with respect to average density throughout any of the 3 dimensions is less than 5%,
(iv) said insulation material having a heat conductivity of 0.021 to 0.029 W/m.K.

2. The insulation material according to claim 1 wherein:
(i) The mean fiber diameter is in the range of 2 to 4 µm,
(ii) said insulation material having a heat conductivity of 0.025 to 0.029 W/m.K.

3. The insulation material according to claim 1 wherein:
(i) The mean fiber diameter is in the range of 1 to 4 µm,
(ii) the fraction of fibers of diameter of less than 2 um is at least 40%,
(iii) said insulation material having a heat conductivity of 0.021 to 0.024 W/m.K.

4. The insulation material according to claim 3 whereas the density variation with respect to average density throughout any of the 3 dimensions is less than 3%,

5. The insulation material according to any preceding claim
wherein at least 60 weight % of the organic content is located at positions where at least two fibers are in contact or at least in close proximity.

6. A method for producing an insulation material according to any of the preceding claims, comprising the steps of
(i) rotating a spinner having an orificed peripheral wall,
(ii) the orificed peripheral wall of the spinner having a top row of orifices, introducing molten mineral material to the spinner to create a fan of primary mineral fibers,
(iii) creating an annular combustion flow of heated gas and directing the annular combustion flow of heated gas substantially through the primary fibers,
(iv) creating an annular flow of attenuating air with an annular blower, the annular flow of attenuating air being sufficient to attenuate the primary fibers into secondary fibers
(v) directing the annular combustion flow of heated gas and the annular flow of attenuating air so that they are radially spaced apart at the level of the top row of orifices,
(vi) directing the annular combustion flow of heated gas and the annular flow of attenuating air so that they are brought together at a position below the top row of orifices,
(vii) entraining the fibers formed by this attenuating gas stream to a receiving device, generally consisting of a gas-permeable belt which is combined with suction means,
(viii) spraying a binder onto the fibers to bind the fibers into a wool product while they are being drawn to the receiving device,
(ix) distributing the stream of fibers into the receiving device by means of additional air streams and or mechanical means
(x) accumulating the fibers on the receiving device under the effect of the suction to provide a fiber mat, the thickness of which may vary depending on the final product to be obtained,
(xi) densifying the secondary fleece, and
(xii) curing the fleece at a temperature in the range of 150 to 250°C.

7. A method according to claim 6, using a spinner having 30,000 to 40,000 orifices.

8. A method according to claim 6, using a spinner having at least 35,000 orifices.
